# FASCICULE DE BREVET EUROPEEN

(11) **EP 1 982 465 B1**
(45) Date de publication et mention de la délivrance du brevet: **31.08.2016**
(21) Numéro de dépôt: 07731545.5
(22) Date de dépôt: 31.01.2007
(51) Int. Cl.: H04W 72/00

(54) **DISPOSITIF ET PROCEDE DE CONTROLE D'ACCES D'EQUIPEMENT(S) D'UTILISATEUR(S) A DES SERVICES DE TYPE MBMS OFFERTS PAR UN RESEAU MOBILE**
VORRICHTUNG UND VERFAHREN ZUR KONTROLLE DES ZUGRIFFS VON BENUTZERGERÄTEN AUF MBMS-DIENSTE EINES MOBILFUNKNETZES
DEVICE AND METHOD FOR CONTROLLING ACCESS OF USER DEVICE(S) TO MBMS SERVICES PROVIDED BY A MOBILE NETWORK

(30) Priorité: 02.02.2006 FR 0650378
(43) Date de publication de la demande: 22.10.2008
(73) Titulaire: ALCATEL LUCENT, 92100 Boulogne-Billancourt (FR)
(72) Inventeur: BOURDEAUT, Stanislas, F-75015 Paris (FR); SEHEDIC, Yann, F-92170 Vanves (FR)
(74) Mandataire: Berthier, Karine
(86) Numéro de dépôt international: PCT/FR2007/050717
(87) Numéro de publication internationale: WO 2007/088311

(56) Documents cités:
- EP-A- 1 594 254
- WO-A-2005/015776
- WO-A-2005/067180
- US-A1- 2005 118 992
- US-A1- 2005 249 141
- US-A1- 2005 271 007
- "Universal Mobile Telecommunications System (UMTS)" ETSI STANDARDS, EUROPEAN TELECOMMUNICATIONS STANDARDS INSTITUTE, SOPHIA-ANTIPO, FR, vol. 3-R2, no. V670, décembre 2005 (2005-12), XP014032608 ISSN: 0000-0001 cité dans la demande

## Description

L'invention concerne le domaine des réseaux de (télé)communication mobile, et plus précisément l'accès d'équipements d'utilisateurs à des services de diffusion de type MBMS (« Multimedia Broadcast / Multimedia Service »).

Comme le sait l'homme de l'art, il a été proposé dans la sixième version des spécifications 3GPP (3rd Generation Partnership Project), régissant la transmission de données multimédia dans les réseaux de (télé)communication mobile (ou cellulaire) au moins 3G, comme par exemple les réseaux UMTS ou EDGE, un service de diffusion unidirectionnelle de type point-à-multipoints (par exemple de données vidéo ou audio), dit MBMS (défini par les spécifications techniques 3GPP TS 25.346 (notamment accessibles sur le site Internet du 3GPP à l'adresse « www.3gpp.org »).

Selon le standard 3GPP, et plus précisément selon la version n°6 des spécifications techniques 3GPP TS 25.331 (notamment accessible sur le site Internet du 3GPP à l'adresse « www.3gpp.org »), deux configurations différentes peuvent permettre à un équipement d'utilisateur d'accéder à un service MBMS (et donc de se joindre à une session MBMS).

Le document WO 2005/015776 décrit un procédé d'accès pour des équipements utilisateurs à des services MBMS fournis par une infrastructure de réseau de radiocommunication UMTS.

Soit l'équipement d'utilisateur présente une première configuration qui le contraint à initialement surveiller (ou écouter) un canal de transport de notifications, appelé MICH (« MBMS, notification Indicator CHannel »), qui est obligatoirement crée et configuré pour ledit service MBMS, afin de récupérer des informations lui permettant ensuite de surveiller (ou d'écouter) un canal logique transportant des informations de contrôle relatives au service MBMS, appelé MCCH (« MBMS point-to-multipoint Control CHannel »), qui est également obligatoirement crée et configuré pour ledit service MBMS. Une fois les informations récupérées dans le canal MCCH, l'équipement d'utilisateur est alors en mesure, si son utilisateur le requiert, d'accéder au service MBMS concerné.

Soit l'équipement d'utilisateur présente une seconde configuration qui le contraint à surveiller (ou écouter) périodiquement le canal MCCH afin de récupérer les informations de contrôle qu'il transporte et qui sont relatives au service MBMS, de manière à pouvoir accéder à ce service MBMS si son utilisateur le requiert. Dans ce cas, le canal MICH est toujours obligatoirement créé et configuré pour le service MBMS.

Si une station de base (appelée Node B dans le cas d'un réseau UMTS), du réseau d'accès radio (appelé UTRAN dans le cas d'un réseau UMTS), ne supporte pas un service MBMS (et plus précisément son plan de contrôle), alors, lorsqu'elle reçoit du contrôleur de réseau (appelé RNC dans le cas d'un réseau UMTS), auquel elle est couplée, des informations MBMS (« Common Transport Channel Set-up » (NBAP 3GPP TS 25.433)) destinées à créer et configurer un canal MICH, elle doit adresser audit contrôleur de réseau un message de rejet de création dudit canal MICH. Par conséquent, les équipements d'utilisateurs qui présentent la première configuration et qui sont connectés à cette station de base ne peuvent pas accéder au service MBMS. Des ressources du réseau, dédiées au service MBMS, sont alors gaspillées inutilement, les équipements d'utilisateurs qui sont connectés à une station de base qui ne supporte pas le canal MICH perdent inutilement du temps à rechercher les informations du canal MICH qui ne peuvent pas être envoyées, et le service MBMS n'est pas accessible dans la cellule contrôlée par cette station de base.

Si les stations de base et les contrôleurs RNC supportent tous les canaux MICH, mais pas l'ensemble des équipements d'utilisateurs, alors des ressources du réseau, dédiées au service MBMS, sont gaspillées inutilement.

Par ailleurs, le protocole RRC (« Radio Resource Control »), qui gère notamment l'établissement des canaux MICH et MCCH et qui est défini dans la version n°6 des spécifications techniques 3GPP TS 25.331, impose la transmission dans le canal MCCH des informations définissant la configuration du canal MICH associé. Par conséquent, chaque fois qu'une station de base ne peut pas supporter le plan de contrôle d'un service MBMS, les équipements d'utilisateurs qui présentent la seconde configuration et qui lui sont connectés gaspillent inutilement des ressources internes pour traiter lesdites informations. Dans cette situation, un opérateur de réseau ne déploie généralement pas le service MBMS.

L'invention a donc pour but d'améliorer la situation.

Elle propose à cet effet un dispositif dédié au contrôle de l'accès d'un équipement d'utilisateur à des services de diffusion de type MBMS d'un réseau de (télé)communication mobile disposant d'un réseau d'accès radio.

Ce dispositif de contrôle d'accès se caractérise par le fait qu'il comprend :
- des moyens de détection chargés de déterminer si des informations générales, relatives à un service de type MBMS et diffusées par le réseau d'accès radio, contiennent des informations de configuration (ou de non configuration, ce qui revient au même) d'un canal de transport de notifications, de type MICH, dédié à ce service de type MBMS, et
- des moyens de contrôle chargés :
   - soit de contraindre l'équipement d'utilisateur à surveiller périodiquement un canal logique, de type MCCH, transportant des informations de contrôle relatives au service de type MBMS, en cas de non détermination des informations de configuration du canal de type MICH, afin de récupérer des informations nécessaires pour accéder au service de type MBMS,
   - soit d'au moins proposer à l'équipement d'utilisateur de surveiller le canal de type MICH en cas de détermination de ses informations de configuration, afin de récupérer des informations de mise à jour du canal de type MCCH permettant de surveiller ce dernier, pour récupérer les informations nécessaires pour accéder au service de type MBMS.

Les moyens de détection peuvent par exemple être chargés de procéder à la détection des informations de configuration (ou de non configuration) d'un canal de type MICH lorsque leur équipement d'utilisateur est placé dans un état choisi parmi au moins l'état de veille (ou « idle »), l'état appelé « URA_PCH », l'état appelé « CELL_PCH » et l'état appelé « CELL_FACH ».

L'invention propose également un équipement d'utilisateur, pour un réseau de (télé)communication mobile disposant d'un réseau d'accès radio et offrant des services de diffusion de type MBMS, équipé d'un dispositif de contrôle d'accès du type de celui présenté ci-avant.

L'invention propose également un procédé dédié au contrôle de l'accès d'équipements d'utilisateurs à des services de diffusion de type MBMS d'un réseau de (télé)communication mobile disposant d'un réseau d'accès radio.

Ce procédé se caractérise par le fait qu'il consiste, en cas d'informations relatives à un service de type MBMS à transmettre à des stations de base du réseau d'accès radio :
i) à déterminer chaque station de base qui ne supporte pas l'établissement d'un canal de transport de notifications, de type MICH, dédié au service de type MBMS, puis
ii) à ne transmettre des informations relatives à la configuration du canal de type MICH qu'à chaque station de base qui supporte l'établissement d'un tel canal de type MICH, et à transmettre des informations générales relatives au service de type MBMS aux équipements d'utilisateurs,
iii) à déterminer au moyen d'un équipement d'utilisateur si les informations générales transmises contiennent les informations de configuration du canal de type MICH, et
iv) soit à contraindre l'équipement d'utilisateur à surveiller périodiquement un canal logique, de type MCCH, transportant des informations de contrôle relatives au service de type MBMS, en cas de non détermination des informations de configuration du canal de type MICH, afin qu'il y récupère des informations nécessaires pour accéder au service de type MBMS, soit à au moins proposer à l'équipement d'utilisateur de surveiller le canal de type MICH en cas de détermination de ses informations de configuration, afin qu'il y récupère des informations de mise à jour du canal de type MCCH permettant de surveiller ce dernier, pour y récupérer les informations nécessaires pour accéder au service de type MBMS.

Au iii), l'équipement d'utilisateur peut procéder à une détection d'informations de configuration (ou de non configuration) d'un canal de type MICH lorsqu'il est placé dans un état choisi parmi au moins l'état de veille, l'état URA_PCH, l'état CELL_PCH et l'état CELL_FACH.

Par ailleurs, au ii) on peut diffuser les informations au moyen d'un protocole de contrôle de ressources radio tel que celui appelé RRC (« Radio Resource Control »).

L'invention est particulièrement bien adaptée, bien que de façon non exclusive, aux réseaux de (télé)communication mobile de troisième génération (3G), par exemple de type UMTS. Mais, d'une manière générale l'invention s'applique dès lors qu'un canal de notification est géré par une station de base tandis qu'un noeud (UTRAN, contrôleur de réseau radio ou passerelle d'accès) gère le plan MBMS d'utilisateur. Par conséquent, l'invention concerne également certains réseaux de type 2G, comme par exemple les réseaux GSM, ou des évolutions de l'UMTS, comme par exemple celle appelée LTE.

D'autres caractéristiques et avantages de l'invention apparaîtront à l'examen de la description détaillée ci-après, et des dessins annexés, sur lesquels :
- la figure 1 illustre de façon très schématique l'architecture générale d'un réseau d'accès radio (UTRAN) d'un réseau de (télé)communication mobile, de type UMTS, et des équipements d'utilisateurs connectés au réseau d'accès radio et équipés d'un dispositif de contrôle d'accès selon l'invention,
- la figure 2 illustre de façon très schématique et fonctionnelle un exemple de réalisation d'un dispositif de contrôle d'accès selon l'invention, implanté dans un équipement d'utilisateur de type téléphone mobile.

Les dessins annexés pourront non seulement servir à compléter l'invention, mais aussi contribuer à sa définition, le cas échéant.

L'invention est destinée à permettre l'accès d'équipements d'utilisateurs à des services de diffusion de type MBMS (« Multimedia Broadcast / Multimedia Service ») lorsqu'ils sont connectés à des stations de base, d'un réseau d'accès radio d'un réseau de (télé)communication mobile, qui supportent ou ne supportent pas une partie au moins du plan de contrôle desdits services de diffusion de type MBMS, et notamment l'établissement d'un canal de type MICH.

Dans ce qui suit, on considère à titre d'exemple non limitatif que le réseau de (télé)communication est de type UMTS (pour « Universal Mobile Telecommunication System ») et qu'il offre des services de diffusion de type MBMS (ci-après appelés services MBMS).

Mais, l'invention n'est pas limitée à ce type de réseau mobile. Elle concerne en effet tout réseau mobile, au moins de deuxième génération (2G), capable de mettre à la disposition d'équipements d'utilisateurs clients, éventuellement mobiles, des services de type MBMS.

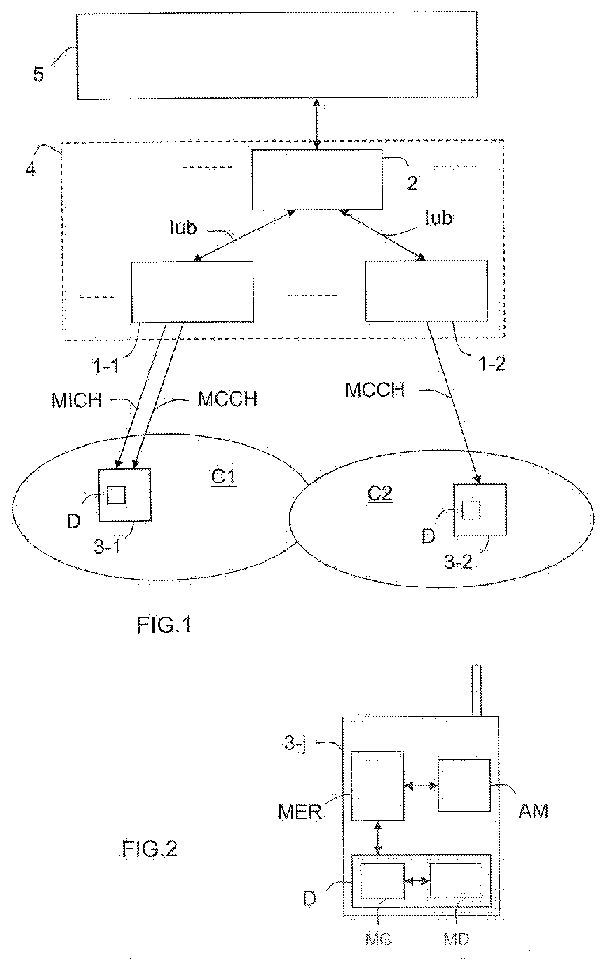

On se réfère tout d'abord à la figure 1 pour décrire, de façon très schématique, mais néanmoins suffisante à la compréhension de l'invention, un exemple de réseau (de (télé)communication) mobile dans lequel peut être mise en oeuvre l'invention.

Le réseau mobile comprend des stations de base 1-i, appelées « Node B » dans le cas de l'UMTS, des contrôleurs de réseau radio (ou de station de base) 2, appelés « RNC » (pour « Radio Network Controller ») dans le cas de l'UMTS, et des équipements d'utilisateurs 3-j, pour certains mobiles, appelés « user equipment » dans le cas de l'UMTS. L'ensemble 4, constitué des stations de base 1-i et des contrôleurs de réseau 2, forme le réseau d'accès radio, appelé UTRAN (pour « UMTS Terrestrial Radio Access Network ») dans le cas de l'UMTS. L'UTRAN est connecté à un coeur de réseau (ou « core network ») 5.

Dans l'exemple non limitatif illustré sur la figure 1, seules deux stations de base 1-1 et 1-2 (i = 1 ou 2), un contrôleur 2 et deux équipements d'utilisateurs 3-1 et 3-2 (j = 1 ou 2) ont été représentés. Mais, les indices i et j peuvent prendre n'importe quelle valeur supérieure ou égale à un (1), et le nombre de contrôleurs 2 peut être supérieur à un (1).

Les équipements d'utilisateurs 3-j sont des terminaux de communication capables d'échanger par voie d'ondes des données, notamment de service et de contrôle, avec le réseau mobile (ou cellulaire). Il s'agit, par exemple, de terminaux mobiles tels que des téléphones mobiles. Dans ce qui suit, on considère, à titre d'exemple illustratif et non limitatif, que les équipements d'utilisateurs 3-j sont des téléphones mobiles.

Les contrôleurs 2 sont en charge du contrôle du réseau radio et des actions effectuées par les différents équipements d'utilisateurs 3-j, tandis que les stations de base 1 sont principalement des émetteurs/récepteurs associés chacun à au moins une zone de couverture (ou cellule) Ci dans laquelle des communications radio peuvent être établies avec des équipements d'utilisateurs 3-j.

Comme indiqué précédemment, l'invention propose de rendre accessible des services (de type) MBMS à des équipements d'utilisateurs 3-j, qui sont respectivement connectés à des stations de base 1-i qui supportent ou ne supportent pas le plan de contrôle de ces services MBMS.

A cet effet, l'invention propose tout d'abord de rendre optionnelle dans le protocole RRC (TS 25.331) la création (et donc la configuration) du canal de transport de notifications, de type MICH (« MBMS point-to-multipoint Control CHannel »). Il est rappelé que le canal de type MICH est dédié au service MBMS conformément au standard 3GPP, et plus précisément conformément à la version n°6 des spécifications techniques TS 25.346 du 3GPP (Technical Spécification Group Radio Access Network - Physical layer - Measurements (FDD)), notamment accessible sur le site Internet du 3GPP à l'adresse « www.3gpp.org ».

Conformément au standard 3GPP actuel, le canal de type MICH doit être établi entre chaque station de base 1-i et les téléphones mobiles 3-j qui sont connectés à elle. Il est chargé de transporter en mode point-à-multipoints des indicateurs de notification (en anglais « notification indicators ») qui indiquent une mise à jour d'un canal logique appelé MCCH (« MBMS point-to-multipoint Control CHannel »), consécutivement à des modifications survenues dans ce dernier, comme par exemple le commencement d'une session MBMS. Le canal MCCH doit être établi entre chaque contrôleur RNC 2 et les téléphones mobiles 3-j qui sont connectés à lui. Il est chargé de transporter en mode point-à-multipoints des informations de contrôle relatives au service MBMS concerné.

Plus précisément, lorsqu'un service MBMS doit être mis à la disposition de téléphones mobiles 3-j, le coeur de réseau 5 transmet classiquement aux contrôleurs 2 de l'UTRAN, selon le protocole RRC (« Radio Resource Control » - défini par TS 25.331 version n°6), des informations générales relatives à ce service MBMS (appelées en anglais, dans le standard 3GPP, « MBMS GENERAL INFORMATION »). Ces informations générales comprennent des informations de configuration du service MBMS et les informations de configuration du canal MICH et du canal logique MCCH.

Lorsqu'un contrôleur 2 reçoit des informations générales relatives à un service MBMS, il détermine si l'une au moins des stations de base 1-i qu'il contrôle ne supporte pas une partie au moins du plan de contrôle du service MBMS, et notamment l'établissement d'un canal de type MICH. Pour ce faire, il se réfère par exemple aux données de configuration dites O&M (« Operating and Management » - surveillance et gestion). Il peut aussi tenter de configurer un canal MICH sur une station de base 1-i qu'il contrôle à l'aide d'un message dit « NBAP Common Transport Channel Set UP », la station de base 1-i répondant à ce message par une indication de succès ou d'échec de configuration.

Si au moins une station de base 1-i (par exemple 1-2) ne supporte pas l'établissement d'un canal de type MICH, le contrôleur 2 qui la contrôle décide de ne par créer de canal MICH entre cette station de base 1-2 et les téléphones mobiles qui sont connectés à elle (comme illustré sur la figure 1).

Dans ce cas, le contrôleur 2 ne transmet qu'à chaque station de base 1-i qu'il contrôle et qui supporte le plan de contrôle du service MBMS (et donc l'établissement d'un canal de type MICH), selon le protocole RRC, les informations de configuration du canal MICH qu'il a reçues, tandis qu'il transmet aux téléphones mobiles 3-j qui sont connectés à lui (via lesdites stations de base 1-i) les informations générales relatives au service MBMS (MBMS GENERAL INFORMATION).

A réception des informations, chaque station de base 1-i qui supporte le plan de contrôle du service MBMS correspondant crée un canal MICH. En parallèle, le contrôleur 2 crée (et configure) le canal MCCH vers les téléphones mobiles 3-j conformément aux informations de configuration contenues dans les informations générales qu'il a reçues. C'est ce qui est illustré sur la figure 1 pour la station de base 1-1.

En revanche, lorsqu'une station de base 1-i ne supporte pas l'établissement d'un canal de type MICH, seul le canal MCCH est créé (et configuré) entre son contrôleur 2 et les téléphones mobiles 3-j qui lui sont connectés. La station de base n'est donc plus obligée d'adresser un message de rejet de création de canal MICH à son contrôleur 2. C'est ce qui est illustré sur la figure 1 pour la station de base 1-2.

L'invention propose en outre d'équiper certains au moins des téléphones mobiles 3-j d'un dispositif de contrôle d'accès D.

Comme cela est illustré sur la figure 2, à titre d'exemple illustratif et non limitatif, un dispositif de contrôle d'accès D, selon l'invention, comprend un module de détection MD et un module de contrôle MC.

Le module de détection MD est par exemple couplé au module d'émission/réception MER du téléphone mobile 3-j afin d'analyser les informations générales (relatives aux services MBMS) qu'il reçoit. Plus précisément, le module de détection MD est chargé de déterminer si les informations générales reçues contiennent des informations de configuration d'un canal MICH dédié à un service MBMS. Pour ce faire, le module de détection MD analyse tout d'abord les informations système (« System Information ») reçues, qui indiquent si un canal MCCH a été créé et configuré. Puis, il analyse les informations générales transportées par le canal MCCH (sur le canal MICH il apprend si le canal MCCH a été mis à jour pour un type de service MBMS). Ainsi, chaque fois que le module d'émission/réception MER reçoit des informations générales, le module de détection MD indique au module de contrôle MC si elles comprennent des informations de configuration d'un canal MICH d'un service MBMS.

Préférentiellement, le module de détection MD procède à la détection des informations de configuration des canaux MICH lorsque son téléphone mobile 3-j est placé dans son état de veille (ou « idle »), ou dans l'un des états appelés, selon le standard, « URA_PCH », « CELL_PCH » et « CELL_FACH ». Il est rappelé que l'état CELL_FACH correspond à une situation dans laquelle le canal de contrôle dédié dit DCCH (« Dedicated Control CHannel ») ainsi qu'éventuellement le canal de trafic dédié dit DTCH (« Dedicated Traffic CHannel » - s'il a été configuré), est (sont) disponible(s) pour le téléphone mobile 3-j. Les états URA_PCH et CELL_PCH correspondent à une situation dans laquelle aucun des canaux DCCH et DTCH n'est disponible pour le téléphone mobile 3-j. Les états CELL_FACH, URA_PCH et CELL_PCH sont notamment décrits en détail dans les spécifications techniques 3GPP TS 25.331 version n°6).

Lorsque le module de contrôle MC est averti par le module de détection MD de l'absence d'information de configuration d'un canal MICH d'un service MBMS, il contraint son téléphone mobile 3-j (par exemple son module d'émission/réception MER), à surveiller périodiquement le canal MCCH de ce service MBMS, afin qu'il récupère parmi les informations qu'il transporte celles qui sont nécessaires à une application multimédia interne AM qu'il comprend pour accéder au service MBMS, si son utilisateur le requiert.

Lorsque le module de contrôle MC est averti par le module de détection MD de la présence d'informations de configuration d'un canal MICH d'un service MBMS, il a intérêt (pour des raisons de performance) à contraindre son téléphone mobile 3-j (par exemple son module d'émission/réception MER), à surveiller ce canal MICH, afin qu'il récupère les informations qui vont lui permettre ensuite de surveiller le canal MCCH associé pour récupérer parmi les informations qu'il transporte celles qui sont nécessaires à l'application multimédia interne AM pour accéder au service MBMS, si son utilisateur le requiert. Par conséquent, le module de contrôle MC peut soit proposer à son téléphone mobile 3-j de surveiller le canal MICH, soit contraindre son téléphone mobile 3-j à surveiller le canal MICH.

L'invention propose donc que les équipements d'utilisateurs s'adaptent eux-mêmes aux conditions imposées par le réseau mobile auquel ils sont connectés. Ainsi, un équipement d'utilisateur peut accéder à un service MBMS offert par le réseau mobile auquel il est connecté, même si la station de base qui assure cette connectivité ne supporte pas le plan de contrôle de ce service MBMS. Cela est particulièrement avantageux car cela permet à l'opérateur d'un réseau mobile de mettre des services MBMS à la disposition de tous ces clients alors même que l'une au moins des stations de base de son réseau mobile ne supporte pas le plan de contrôle de l'un au moins des services MBMS. Cette situation se rencontre notamment lorsque le réseau d'accès radio du réseau mobile comporte une interface lu-B ouverte. De plus, l'invention permet d'utiliser des stations de base de type Node B 3GPP R99 (version 99) avec des contrôleurs de réseau radio (RNCs) supportant les services MBMS.

Le dispositif de contrôle d'accès D selon l'invention, et notamment ses module de détection MD et module de contrôle MC, peuvent être réalisés sous la forme de circuits électroniques, de modules logiciels (ou informatiques), ou d'une combinaison de circuits et de logiciels.

L'invention ne se limite pas aux modes de réalisation de dispositif de contrôle d'accès et d'équipement d'utilisateur décrits ci-avant, seulement à titre d'exemple, mais elle englobe toutes les variantes que pourra envisager l'homme de l'art dans le cadre des revendications ci-après.

## Revendications

1. Dispositif (D) de contrôle d'accès d'un équipement d'utilisateur (3-1, 3-2, 3-j) à des services de diffusion de type Multimedia Broadcast Multicast Service « MBMS » d'un réseau de communication mobile disposant d'un réseau d'accès radio (4), **caractérisé en ce qu'**il comprend i) des moyens de détection (MD) agencés pour déterminer si des informations générales, relatives à un service de type MBMS et diffusées par ledit réseau d'accès radio (4), contiennent des informations de configuration d'un canal de transport de notifications, de type MBMS, notification Indicator Channel « MICH », dédié audit service de type MBMS et ii) des moyens de contrôle (MC) agencés soit pour contraindre ledit équipement d'utilisateur (3-1, 3-2, 3-j) à surveiller périodiquement un canal logique, de type MBMS Control Channel « MCCH », transportant des informations de contrôle relatives audit service de type MBMS, en cas de non détermination desdites informations de configuration du canal de type MICH, afin de récupérer des informations nécessaires pour accéder audit service de type MBMS, soit pour au moins proposer audit équipement d'utilisateur (3-1, 3-2, 3-j) de surveiller ledit canal de type MICH en cas de détermination de ses informations de configuration, afin de récupérer des informations de mise à jour dudit canal de type MCCH permettant de surveiller ce dernier, de manière à récupérer lesdites informations nécessaires pour accéder audit service de type MBMS.

2. Dispositif selon la revendication 1, **caractérisé en ce que** lesdits moyens de détection (MD) sont agencés pour procéder à une détection d'informations de configuration d'un canal de type MICH lorsque ledit équipement d'utilisateur (3-1, 3-2, 3-j) est placé dans un état choisi dans un groupe comprenant au moins un état de veille, un état appelé « URA_PCH », un état appelé « CELL_PCH » et un état appelé « CELL_FACH ».

3. Equipement d'utilisateur (3-1, 3-2, 3-j) pour un réseau de (télé)communication mobile disposant d'un réseau d'accès radio (4) et offrant des services de diffusion de type MBMS, **caractérisé en ce qu'**il comprend un dispositif de contrôle d'accès (D) selon l'une des revendications précédentes.

4. Procédé de contrôle d'accès d'équipements d'utilisateurs (3-1, 3-2. 3-j) à des services de diffusion de type Multimedia Broadcast Multicast Service « MBMS » d'un réseau de communication mobile disposant d'un réseau d'accès radio (4), **caractérisé en ce qu'**il consiste, en cas d'informations relatives à un service de type MBMS, à transmettre à des stations de base (1-1, 1-2) dudit réseau d'accès radio (4), i) à déterminer chaque station de base (1-1, 1-2) ne supportant pas l'établissement d'un canal de transport de notifications, de type MBMS notification Indicator Channel « MICH », dédié audit service de type MBMS, puis ii) à ne transmettre des informations relatives à la configuration dudit canal de type MICH qu'à chaque station de base (1-1, 1-2) qui supporte l'établissement d'un tel canal de type MICH, et à transmettre des informations générales relatives audit service de type MBMS à des équipements d'utilisateurs (3-1, 3-2, 3-j), puis iii) à déterminer au moyen d'un équipement d'utilisateur (3-1, 3-2, 3-J) si lesdites informations générales transmises contiennent lesdites informations de configuration du canal de type MICH, et iv) soit à contraindre ledit équipement d'utilisateur (3-1, 3-2, 3-j) à surveiller périodiquement un canal logique, de type MBMS, Control Channel « MCCH », transportant des informations de contrôle relatives audit service de type MBMS, en cas de non détermination desdites informations de configuration du canal de type MICH, afin qu'il récupère des informations nécessaires pour accéder audit service de type MBMS, soit à au moins proposer audit équipement d'utilisateur (3-1, 3-2, 3-j) de surveiller au moins ledit canal de type MICH en cas de détermination de ses informations de configuration, afin qu'il récupère des informations de mise à jour dudit canal de type MCCH permettant de surveiller ce dernier, pour récupérer lesdites informations nécessaires pour accéder audit service de type MBMS

5. Procédé selon la revendication 4, **caractérisé en ce qu'**au iii) ledit équipement d'utilisateur (3-1, 3-2, 3-j) procède à une détection d'informations de configuration d'un canal de type MICH lorsqu'il est placé dans un état choisi dans un groupe comprenant au moins un état de veille, un état appelé « URA_PCH », un état appelé « GELL_PCH» » et un état appelé « CELL_FACH».

6. Procédé selon l'une des revendications 4 et 5, **caractérisé en ce qu'**au ii) on diffuse lesdites informations au moyen d'un protocole de contrôle de ressources radio appelé RRC.

## Patentansprüche

1. Vorrichtung (D) zur Zugriffskontrolle einer Benutzerausrüstung (3-1, 3-2, 3-j) auf Sendedienste vom Typ Multimedia Broadcast Multicast Service "MBMS" eines mobilen Kommunikationsnetzwerks, das über ein Funkzugangsnetzwerk (4) verfügt, **dadurch gekennzeichnet, dass** sie i) Erkennungsmittel (MD), die angeordnet sind, um zu erkennen, ob allgemeine Informationen über einen Dienst vom Typ MBMS, die vom Funkzugangsnetzwerk (4) gesendet werden, Konfigurationsinformationen eines Meldungsübermittlungskanals vom Typ MBMS notification Indicator Channel "MICH", der für den Dienst vom Typ MBMS vorgesehen ist, enthalten und ii) Kontrollmittel (MC) umfasst, die entweder angeordnet sind, um die Benutzerausrüstung (3-1, 3-2, 3-j) zu zwingen, periodisch einen logischen Kanal vom Typ MBMS Control Channel "MCCH" zu überwachen, der Kontrollinformationen über den Dienst vom Typ MBMS transportiert, falls die Konfigurationsinformationen des Kanals vom Typ MICH nicht festgelegt sind, um notwendige Informationen zu erhalten, um auf den Dienst vom Typ MBMS zuzugreifen, oder die angeordnet sind, um der Benutzerausrüstung (3-1, 3-2, 3-j) zumindest anzubieten, den Kanal vom Typ MICH zu überwachen falls seine Konfigurationsinformationen festgelegt sind, um die Aktualisierungsinformationen des Kanals vom Typ MCCH zu erhalten, die es ermöglichen, diesen zu überwachen, sodass die Informationen zugänglich sind, die notwendig sind, um auf den Dienst vom Typ MBMS zuzugreifen.

2. Vorrichtung nach Anspruch 1, **dadurch gekennzeichnet, dass** die Erkennungsmittel (MD) angeordnet sind, um eine Erkennung von Konfigurationsinformationen eines Kanals vom Typ MICH durchzuführen, wenn die Benutzerausrüstung (3-1, 3-2, 3-j) in einen Zustand versetzt wird, der aus einer Gruppe, zumindest bestehend aus einem Stand-by-Zustand, einem Zustand genannt "URA_PCH", einem Zustand genannt "CELL_PCH" und einem Zustand "CELL_FACH", ausgewählt wird.

3. Benutzerausrüstung (3-1, 3-2, 3-j) für ein mobiles (Tele)kommunikationsnetzwerk, das über ein Funkzugangsnetzwerk (4) verfügt und Sendedienste vom Typ MBMS anbietet, **dadurch gekennzeichnet, dass** sie eine Vorrichtung zur Zugriffskontrolle (D) nach einem der vorangehenden Ansprüche umfasst.

4. Verfahren für die Zugriffskontrolle von Benutzerausrüstungen (3-1, 3-2, 3-j) auf Sendedienste vom Typ Multimedia Broadcast Multicast Service "MBMS" eines mobilen Kommunikationsnetzwerks, das über ein Funkzugangsnetzwerk (4) verfügt, **dadurch gekennzeichnet, dass** es im Fall von Informationen über einen Dienst vom Typ MBMS, die an die Basisstationen (1-1, 1-2) des Funkzugangsnetzwerks (4) zu übertragen sind, darin besteht, i) jede Basisstation (1-1, 1-2) zu bestimmen, welche die Errichtung eines Meldungsübermittlungskanals vom Typ MBMS notification Indicator Channel "MICH", der dem Dienst vom Typ MBMS dient, nicht unterstützt, und dann ii) Informationen über die Konfiguration des Kanals vom Typ MICH ausschließlich an jede Basisstation (1-1, 1-2) zu übertragen, welche die Errichtung eines solchen Kanals vom Typ MICH unterstützt, und allgemeine Informationen über den Dienst vom Typ MBMS an Benutzerausrüstungen (3-1. 3-2, 3-j) zu übertragen und dann iii) mittels einer Benutzerausrüstung (3-1, 3-2, 3-j) zu ermitteln, ob die übertragenen allgemeinen Informationen die Konfigurationsinformationen des Kanals vom Typ MICH enthalten und iv) entweder die Benutzerausrüstung (3-1, 3-2, 3-j) zu zwingen, einen logischen Kanal vom Typ MBMS Control Channel "MCCH", der Steuerinformationen über den Dienst vom Typ MICH überträgt, periodisch zu überwachen, falls die Konfigurationsinformationen des Kanals vom Typ MICH nicht festgelegt sind, um die erforderlichen Informationen für den Zugriff auf den Dienst vom Typ MBMS zu erhalten, oder der Benutzerausrüstung (3-1, 3-2, 3-j) zumindest vorzuschlagen, zumindest den Kanal vom Typ MICH zu überwachen falls seine Konfigurationsinformationen festgelegt sind, um Aktualisierungsinformationen vom Kanal des Typs MCCH zu erhalten, die es ermöglichen, diesen zu überwachen, um die erforderlichen Informationen für den Zugriff auf den Dienst vom Typ MBMS zu erhalten.

5. Verfahren nach Anspruch 4, **dadurch gekennzeichnet, dass** bei iii) die Benutzerausrüstung (3-1, 3-2, 3-j) eine Erkennung von Konfigurationsinformationen eines Kanals vom Typ MICH durchführt, wenn sie in einen Zustand versetzt wird, der aus einer Gruppe, zumindest bestehend aus einem Stand-by-Zustand, einem Zustand genannt "URA_PCH", einem Zustand genannt "CELL_PCH" und einem Zustand "CELL_FACH", ausgewählt wird.

6. Verfahren nach einem der Ansprüche 4 und 5, **dadurch gekennzeichnet, dass** bei ii) die Informationen mittels eines Protokolls für die Steuerung funktechnischer Ressourcen, genannt RRC verbreitet werden.

## Claims

1. A device (D) for controlling access of a piece of user equipment (3-1, 3-2, 3-j) to "MBMS" Multimedia Broadcast Multicast Services of a mobile communication network having a radio access network (4), **characterized in that** it comprises i) means of detection (MD) arranged to determine whether general information, related to an MBMS service and broadcast by said radio access network (4), contains configuration information of a notification transport channel, of the "MICH" MBMS Notification Indicator Channel type, dedicated to said MBMS service, and ii) means of control (MC) arranged either to force said user equipment (3-1, 3-2, 3-j) to periodically monitor a logical channel, of the "MCCH" MBMS Control Channel type, carrying control information related to said MBMS service, in the event that said configuration information of the MICH channel is not determined, in order to retrieve the information needed to access said MBMS service, or else to at least propose to said user equipment (3-1, 3-2, 3-j) to monitor said MICH channel in the event that its configuration information is determined, in order to retrieve update information of said MCCH channel to monitor that channel, so as to retrieve said information needed to access said MBMS service.

2. A device according to claim 1, **characterized in that** said means of detection (MD) are arranged to detect configuration information of an MICH channel when said user equipment (3-1, 3-2, 3-j) is placed in a state chosen from a group comprising at least one idle state, a state called "URA_PCH", a state called "CELL_PCH", and a state called "CELL_FACH".

3. A piece of user equipment (3-1, 3-2, 3-j) for a mobile (tele)communication network having a radio access network (4) and offering MBMS broadcast services, **characterized in that** it comprises an access control device (D) according to any one of the preceding claims.

4. A method for controlling access by user equipment (3-1, 3-2, 3-j) to "MBMS" Multimedia Broadcast Multicast Services of a mobile communication network having a radio access network (4), **characterized in that** it consists, in the case of information related to an MBMS service to be transmitted to base stations (1-1, 1-2) of said radio access network (4), of i) determining each base station (1-1, 1-2) that does not support the establishment of a notification transport channel, of the "MICH" MBMS Notification Indicator Channel type, dedicated to said MBMS service, then ii) transmitting information related to the configuration of said MICH channel only to each base station (1-1, 1-2) that supports the establishment of such an MICH channel, and of transmitting general information related to said MBMS service to user equipment (3-1, 3-2, 3-j), then iii) determining by means of user equipment (3-1, 3-2, 3-j) whether said transmitted general information contains said configuration information of the MICH channel, and iv) either forcing said user equipment (3-1, 3-2, 3-j) to periodically monitor an "MCCH" MBMS Control Channel logical channel, carrying control information related to said MBMS service, in the event that said configuration information of the MICH channel is not determined, so that it can retrieve the information needed to access said MBMS service, or else to at least propose to said user equipment (3-1, 3-2, 3-j) to monitor at least said MICH channel in the event that its configuration information is determined, so that it can retrieve update information of said MCCH channel to monitor that channel, in order to retrieve said information needed to access said MBMS service.

5. A method according to claim 4, **characterized in that** in iii) said user equipment (3-1, 3-2, 3-j) detects configuration information of an MICH channel when it is placed in a state chosen from a group comprising at least one idle state, a state called "URA_PCH", a state called "CELL_PCH", and a state called "CELL_FACH".

6. A method according to one of the claims 4 and 5, **characterized in that** in ii) said information is broadcast by means of a radio resource control protocol called RRC.
